# EUROPEAN PATENT SPECIFICATION

(11) **EP 1 214 803 B1**
(45) Date of publication and mention of the grant of the patent: **01.12.2004**
(21) Application number: 99974043.4
(22) Date of filing: 20.09.1999
(51) Int. Cl.: H04B 7/26, H04J 3/04, H04Q 7/38, H04J 3/06

(54) **A METHOD TO DECREASE SYNCHRONIZATION TIME IN HANDOVER**
VERFAHREN ZU REDUZIERUNG DER SYNCHRONISATIONSZEIT WÄHREND WEITERREICHENS
PROCEDE PERMETTANT DE REDUIRE LE TEMPS DE SYNCHRONISATION DANS UN TRANSFERT INTERCELLULAIRE

(43) Date of publication of application: 19.06.2002
(73) Proprietor: Nokia Corporation, 02150 Espoo (FI)
(72) Inventor: VIHRIÄLÄ, Jaakko, FIN-90800 Oulo (FI)
(74) Representative: Leson, Thomas Johannes Alois, Dipl.-Ing.
(86) International application number: PCT/EP1999/006951
(87) International publication number: WO 2001/022620

(56) References cited:
- WO-A-98/15150
- US-A- 5 394 158

## Description

### Field of the invention

The present invention relates to a method for performing synchronisation of a mobile network device to a network control device of a radio network region, and to a network control device adapted to perform this method.

### BACKGROUND OF THE INVENTION

A mobile network consists of a plurality of cells, each of which being provided with one or more base stations. When a mobile station moves from a first cell to a second cell, a handover (handoff) is performed by which the mobile station is disconnected from the first cell (i.e., the base station thereof) and connected to the second cell (i.e., the base station of the second cell). A handover is usually performed when the signal strength of the current base station drops and the signal strength of a neighbouring cell is greater than that of the current base station. It is noted that in CDMA (Code Division Multiple Access) based system usually the signal-to-noise ration SNR is used for deciding a handover.

In detail, the mobile station continually provides measurements of the signal strength from surrounding cells (i.e., base stations). The measurements are conducted when it is not transmitting or receiving (for example, during TDMA (Time Divisional Multiple Access) bursts), but can also be conducted while transmitting or receiving. A base station controller (BSC) or a mobile services switching center (MSC) collects these measurements along with its knowledge of the quality of the existing link. In the case that it is decided that a handover is necessary, the BSC or MSC instructs the base station (BS) of the new cell to prepare a channel, takes note of the channel it has prepared, sends a message to the mobile telling it the channel to which to move, checks that the mobile appears on this channel, and then deactivates the old channel. The MSC may also decide to hand over mobiles due to traffic congestion. If there is one highly congested cell, the mobile stations in the cell who could also get coverage from other neighbouring cells might be instructed to hand over to reduce the load on the congested cell.

Besides this 'hard' handover in which the MS is switched from one channel to another, there is also a handover procedure, during which the MS is connected via both channels. This is called a 'soft' handover and serves to provide a better speech quality during the handover, since during the hard handover there is the risk that the connection is interrupted for a short time. A further kind of handover is the so-called 'softer' handover which is performed within the same cell.

Since the handover between two cells is not performed on a predetermined geographical location but depending on the signal strength, the distance between the MS and the new BS is not known. This is because the cell boundaries are not sharp but ambiguous due to shadowing and the like. Furthermore, the cell boundaries can also change in time due to cell breathing.

Thus, after a handover, the distance between the MS and the new BS is not known. Therefore, also a propagation delay due to the distance occurring between the MS and the BS is unknown. However, it is important for the base station to know the propagation delay since otherwise interference and the like can occur.

In particular, the propagation delay is important for a synchronisation between uplink and downlink. For example, in GSM (Global System for Mobile Communications), the communication between the mobile station and the base station is performed in two different time slots, In particular, the transmission of uplink bursts is performed three time slots after transmission of downlink bursts. The time differences between the time slots are exactly defined. Therefore, in case of a great distance between the MS and the BS, the propagation delay of downlink bursts and uplink bursts has to be taken into account. Consequently, the MS needs to transmit a time period earlier than that defined only by the difference of the time slots. The information about how much earlier a burst has to be sent is conveyed to the MS by a signal TA (Timing Advance) which is generated by the BS or BSC according to the current propagation delay, wherein the value of TA corresponds to the round trip value of the propagation BS-MS-BS, i.e. twice of the propagation delay. The TA is dynamic and changes in time. Its current value is sent to the MS within an information channel (in detail, in the layer 1 header of each SACCH, i.e., Slow Associated Control Channel). The farther the MS is away from the BS, the larger is the required TA.

Thus, immediately after a handover has been performed, the propagation delay between the MS and the new BS is maximum since usually a handover is performed at the boundary of the corresponding cell. However, at this time the propagation delay is also not known.

Therefore, especially in case of a large cell, an incorrect TA value causes interference. Although in CDMA networks interference power decreases soon after completing the handover (because of a power control and the soft handover mentioned above), this interference occurs in connection with the handover and affects the communication quality greatly. Moreover, not only the current connection between the current MS and the BS is affected by such an interference, but also other connections are interfered since due to a wrong estimated propagation delay the transmission is shifted also into a neighbouring time slot such that the communication (between the BS and other MS's) effected via this time slot is affected.

It is to be noted that the propagation delay has been described with respect to GSM as an example, however, this problem also occurs in other kinds of radio networks.

US 5 349 158 discloses a handover initiation system for a cellular radio network comprising means for determining both the distance of a mobile user from a cell base station based on propagation delay techniques and means for measuring the signal strength to determine the path of the mobile.

WO 98/15150 describes a method for determining the position of a mobile based on propagation delay measurements.

In view of the above, it is necessary for providing a good connection that a correct propagation delay is detected as soon as possible.

Heretofore, a large matched filter was used for such a detection. Using a matched filter allows to detect the propagation delay although it is not known or uncertain at the beginning. However, the matched filter must be set such that it can detect a minimum propagation delay (i.e., a delay of zero) and a maximum propagation delay for the cell. That is, a huge extent of different possible propagation delays has to be considered. This requires a huge hardware amount. Furthermore, for the same reason a rather long search time has to be expected.

### SUMMARY OF THE INVENTION

Thus, the object underlying the invention is to eliminate the above drawbacks of the prior art and to allow a fast detection of the propagation delay.

This object is solved by a method for performing synchronisation of a mobile network device to a network control device of a present radio network region after a handover. The method comprises the steps of detecting a source radio network region from which said handover of said mobile.network device to said present radio network region has been performed, determining a start propagation delay value based on said detected source radio network region of said mobile station, and searching an actual propagation delay value by using a search strategy based on said determined start propagation delay value.

Furthermore, the above object is solved by a network control device of a present radio network region, comprising a detecting means for detecting a source radio network region from which a handover of a mobile network device to the present radio network region has been performed, a determining means for determining a start propagation delay value based on said detected source radio network region of said mobile station, and a search means for searching an actual propagation delay value by using a search strategy based on the determined start propagation delay value.

By the above method and network control device, the correct propagation delay can be detected very fast, since the values of the propagation delay from known neighbouring cells are stored and used to generate a start value for the search of the correct propagation delay.

Moreover, only a short matched filter (MF) is required for the search of the correct propagation delay. Hence, the hardware amount can be decreased.

Furthermore, since the most probable delay is searched first, the search time is minimized, closed loop power control can be activated and the interference to the network is minimized thus leading to increased capacity of the network

Further advantageous developments are defined in the dependent claims.

### BRIEF DESCRIPTION OF THE DRAWINGS

The present invention will be more readily understood with reference to the accompanying drawings in which:
Fig. 1 shows a radio network to which the present embodiment is applicable,
Fig. 2 shows flowchart illustrating a method for synchronizing according to the present embodiment,
Fig. 3 shows a base station according to the present embodiment,
Fig. 4 shows the content of a database 14 of the base station according to the present embodiment,
Fig. 5 shows the content of a modified database 14' of the base station according to a modified embodiment, and
Figs. 6a to 6e examples for propagation delay search strategies used according to the embodiment and the modified embodiment.

### DETAILED DESCRIPTION OF PREFERRED EMBODIMENTS

In the following, a preferred embodiment of the invention is described in more detail with reference to the accompanying drawings.

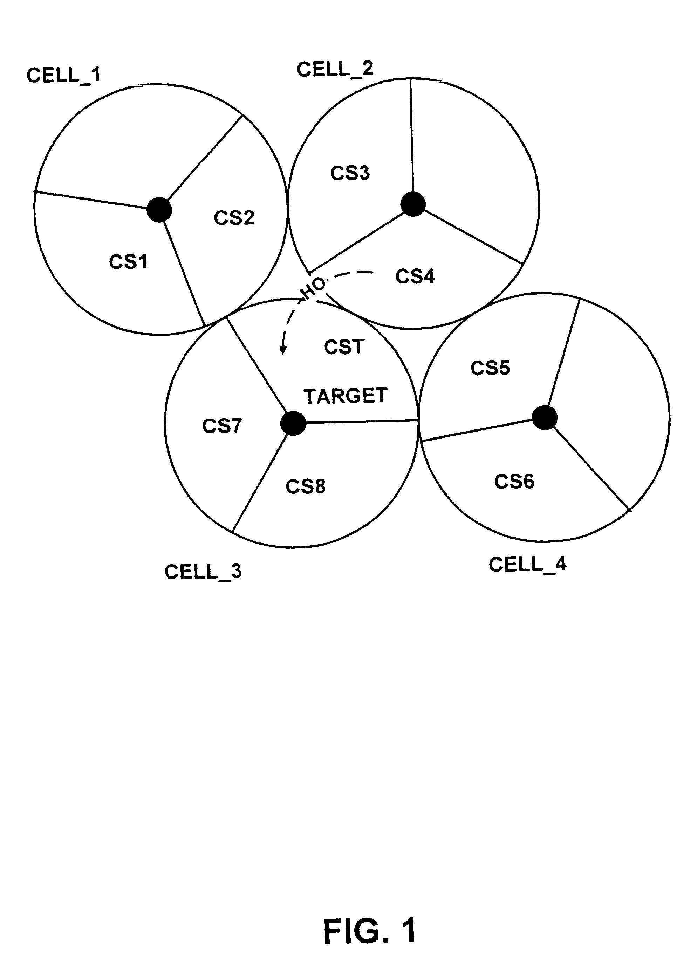

Fig. 1 shows schematically a radio network consisting of a plurality of cells to which the present invention can be applied. In this example, only four cells CELL_1, CELL_2, CELL_3 and CELL_4 are shown. Each cell is subdivided in three sectors. Here, each sector represents an example for a radio network region. In case the cells are not subdivided, also a cell may be a radio network region.

In the following, a case is considered in which a handover of a mobile station (referred to by MS in the following) as an example for a mobile network device to the target sector CST is performed. The source sector (i.e., the sector from which the MS has been shifted to the target sector CST) is one of the neighbouring sectors CS1 to CS8.

In this network, for example a handover from sector CS4 (as the source sector) located in cell CELL_2 to the target sector CST is effected. This handover (HO) is indicated by the dotted arrow in Fig. 1.

It has to be noted that the cell boundaries are not sharp as shown in Fig. 1 but are ambiguous due to shadowing and can even change in time due to cell breathing. The phenomena of the so-called cell breathing is caused by changing transmission conditions due to weather conditions or varying loads in the cell.

As already described in the introductory part, a handover is initiated in case the signal strength of a connection between an MS and a base station (in the following referred to as BS) decreases below a certain level. Then, usually a handover to a cell (i.e., BS) with the greatest signal strength is performed. Thus, the position of the MS during the handover and, hence, the correct propagation delay between the MS and the new BS immediately after the handover is unknown.

According to the present embodiment, the correct propagation delay is searched by using a search strategy in which start value is used and which is then stepwise approximated to the real propagation delay value by performing iterations.

In particular, as the start value, a value is determined (or selected) based on the source cell or source sector. That is, a known past propagation value for an MS which has performed a handover from the same source cell or sector to the target cell or sector is used as a start value for the search.

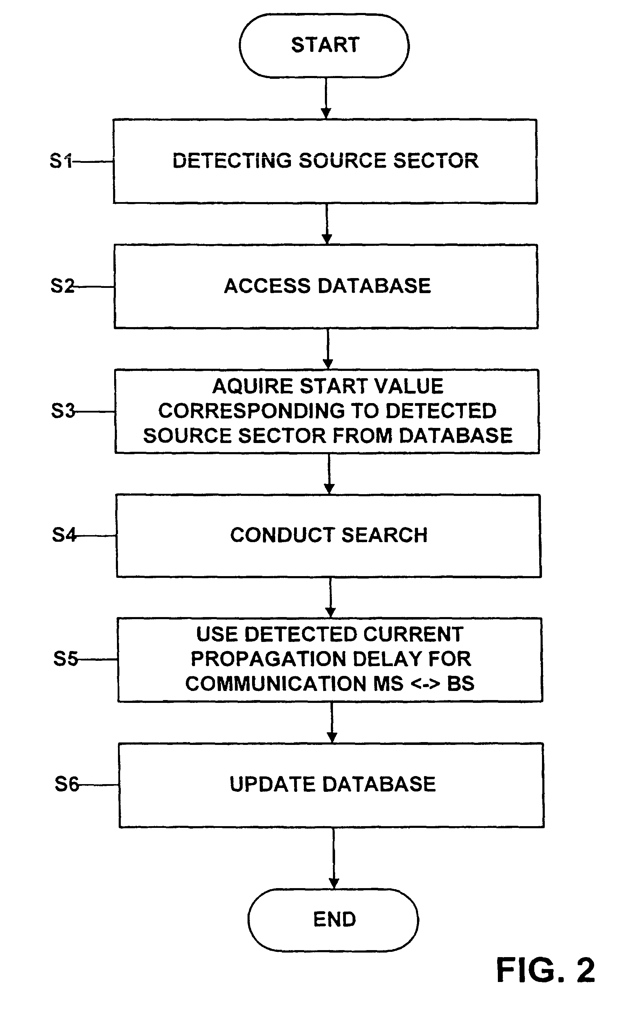

The operation carried out according to the present embodiment is described by referring to a flow chart shown in Fig. 2.

First, the source sector is detected in step S2. This can be effected such that the MS sends a corresponding information after a connection between the new BS and the MS has been established.

Another way of detecting the source sector of the MS performing a handover could be effected such that the source BS (e.g., the BS of sector CD4 in cell CELL_2) transmits a corresponding information from to the BS of the target sector CST.

Based on this information, a start value for conducting a search for the correct current propagation delay is searched. This is effected by accessing a database in step S2.

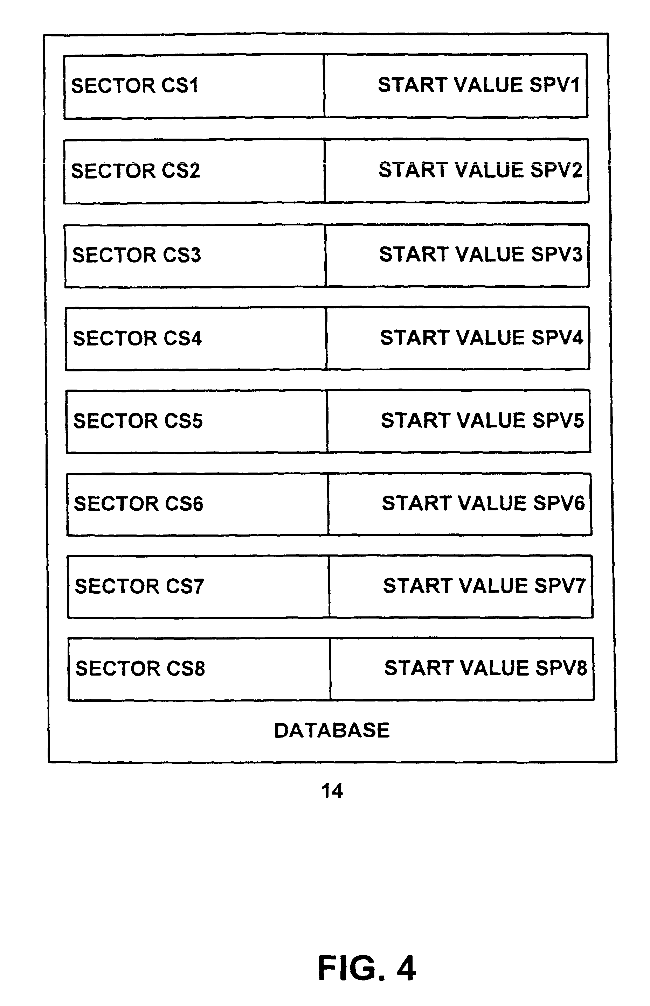

In this database, propagation delay values corresponding to source sectors are stored. According to this embodiment, one propagation delay start value is stored for each source sector. An example for the content of such a database is shown in Fig. 4. The values are updated such that by the database always start values are provided which are close to the actual propagation delay value. Updating of the propagation delay start values in the database is described later in the description.

The database could reside in every BS of each sector or in a radio network control device (RNC). The required size of memory is quite small: Assuming that there are 8 possible source sectors each having 512 chip delay uncertainty (in case spread spectrum is used) and an matched filter (MF) length of 32 chips. Then, the required amount of memory per BS (or sector) is 8 x 512/32 = 128 words.

Thus, the corresponding start value is acquired from the database in step S3. Then, in step S4 a search for the correct current propagation delay is conducted based on the acquired start value.

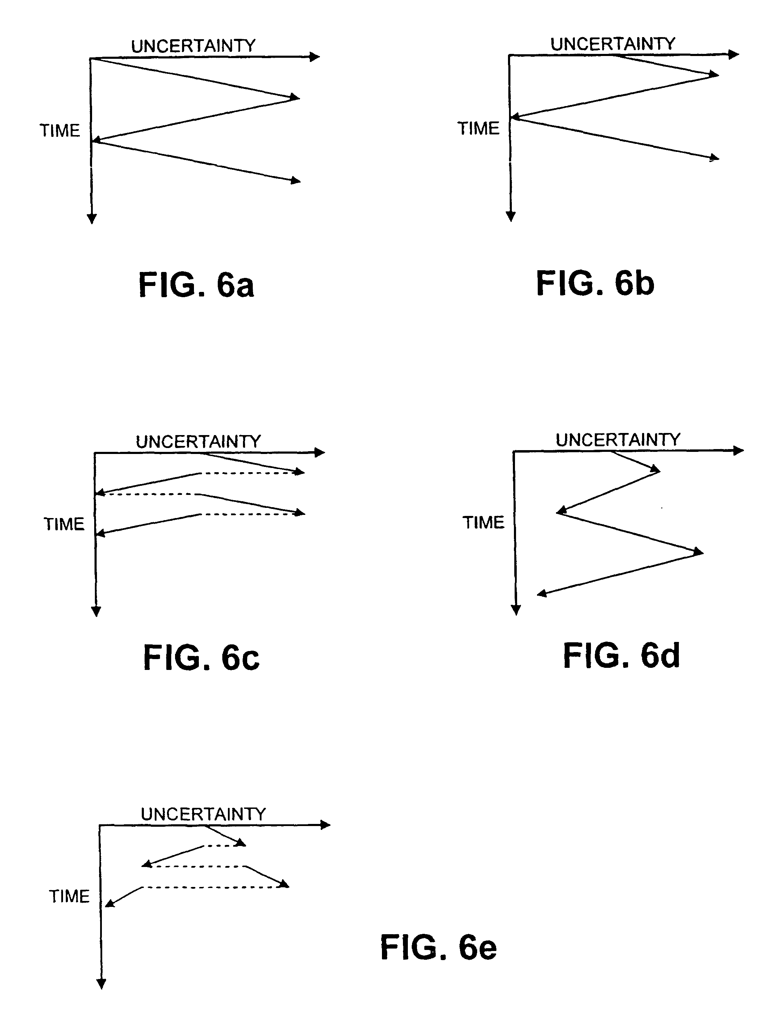

The search strategy used for searching the propagation value can be z-search or expanding window, for example. Examples for such search strategies are shown in Figs. 6a to 6e. In all figures, the uncertainty refers to the delay.

Figs. 6a to 6b illustrate examples for the z-search. This search is appropriate if the probability density function of the expected delay (uncertainty) is even distributed. According to Fig. 6a, the search is started from a start point at the edge of the interval, whereas according to Fig. 6b the search is started from a centre point of the search interval. In both cases, the search is conducted continuously over the interval. According to Fig. 6c, the z-search is started from the centre, but conducted discontinuously, as indicated by the hatched lines.

Figs. 6d and 6e show examples for expanding window. According to this strategy, the search is started from a certain starting point. If the signal is not found at this delay, the next one is checked and this is continued until at some point, the search direction is inverted. According to this search, the search interval is increased at every turn of the search direction. The expanding window search strategy is the optimal search strategy if the probability function of the expected delay is gaussian (with centre at starting point). Broken expanding window (as shown in Fig. 6e) performs better than the continuous expanding window search strategy shown in Fig. 6d if it is known that the probability of detection is always 1 (however, in practice, this is usually not the case).

The search can be conducted using a short matched filter since the uncertainty of the propagation delay value is small.

After detecting the current propagation delay value, this value is used for the communication between the mobile station and the base station, as indicated in step S5.

After this, the database is updated by using the detected current propagation delay value in step S6 which is described later.

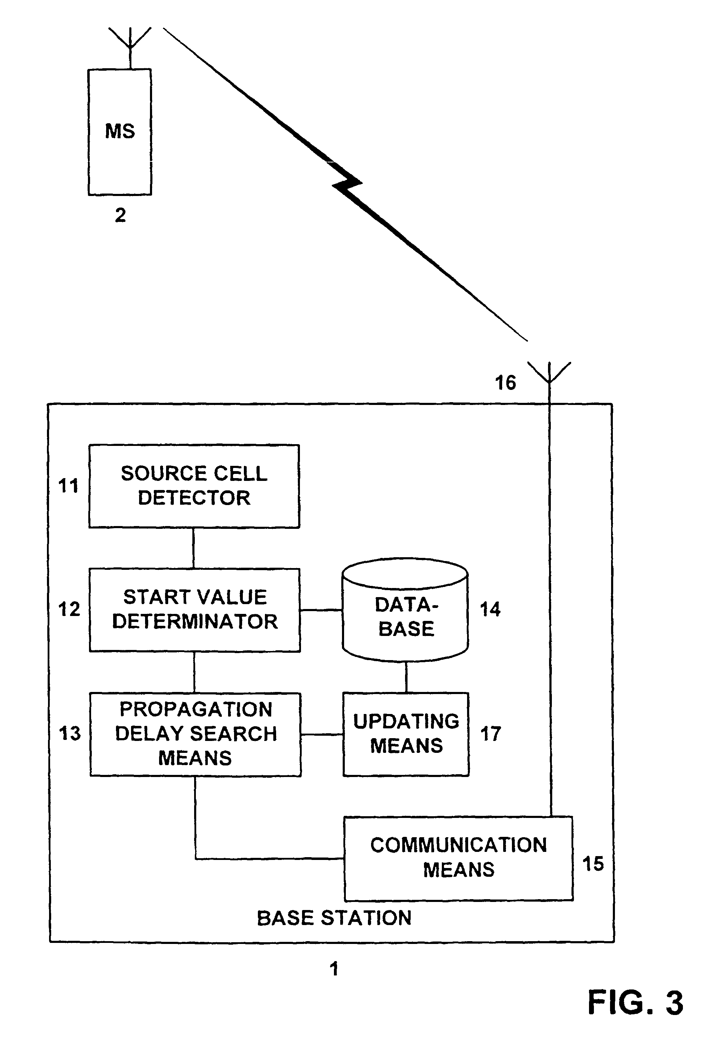

The method described above can be executed by the base station of the target sector CST in cell CELL_3. This base station is schematically illustrated in Fig. 3. For simplifying the illustration, only the means important for the present embodiment are shown.

The base station of the target sector CST is denoted by reference numeral 1. The base station 1 comprises a source cell detector 11 which is adapted to detect the source cell of a mobile station just having performed a handover, i.e., to execute step S1 described above.

The information related to the detected source cell (in the above example, sector CS4 of cell CELL_2) is supplied to a start value determining means 12. The start value determining means determines a start value for the propagation delay search by referring to a database 14. That is, the start value determining means performs the steps S2 and S3 described above.

The detected start value is supplied to a propagation delay search means 13. This means carries out the search for the propagation delay value (e.g., z-search or expanding window) described above. Thus, it serves to execute step S4.

The detected propagation value is supplied to a communication means 15 which performs communication with the mobile station 2 via an antenna 16. The communication means 15 uses the detected propagation value and, thus, executes step S5.

It has to be noted that the source cell detector 11, the start value determining means 12 and the propagation delay search means 13 can be combined to a single controller. This controller can comprise a CPU (central processing unit), a ROM (read-only memory) in which the steps according to Fig. 2 are stored as a program, and a RAM (random access memory) as a working memory. The data base 14 is preferably a non-volatile memory, for example an EEPROM (electrically erasable, programmable read-only memory) or the like.

For the propagation delay start values stored in the database 14 it is necessary that these start values are as close to the real propagation delay value as possible because then the search can be effected in a very short time. Thus, the propagation delay start values should be updated in accordance with the current communication conditions.

The base station 1 shown in Fig. 1 comprises an updating means 17 adapted to perform the updating of the database 14. Hence, the current propagation delay value CPV is also supplied to the updating means 17 which can access the database 14. According to this embodiment, the updating means can be a simple memory access means which can read and write data to a predetermined address. Therefore, the database 14 is preferably accessible from two sources, i.e., a non-volatile dual-port RAM or the like.

As an alternative, the updating means 17 can also be integrated in the single controller mentioned above such that the database needs to be accessed via one port only.

According to the present embodiment, updating of the database is effected by using propagation delays which were detected immediately before. That is, each time a new propagation delay has been detected, this new propagation delay is written into the database 14 instead of the start value which has been used for detecting the propagation value.

By referring to the example described above, this means that after detecting the current propagation value for a handover from sector CS4 to CST, this current propagation value is written in the data base 14 in the place of the start value SPV4 corresponding to sector CS4.

By this measure, the search is always based on the real propagation delay which was detected immediately before the current handover. Thus, the start value is very close to the current propagation value.

As an alternative, the history of the detected propagation delay can be considered. Such a measure is described with respect to a modification of the above-described embodiment hereinafter.

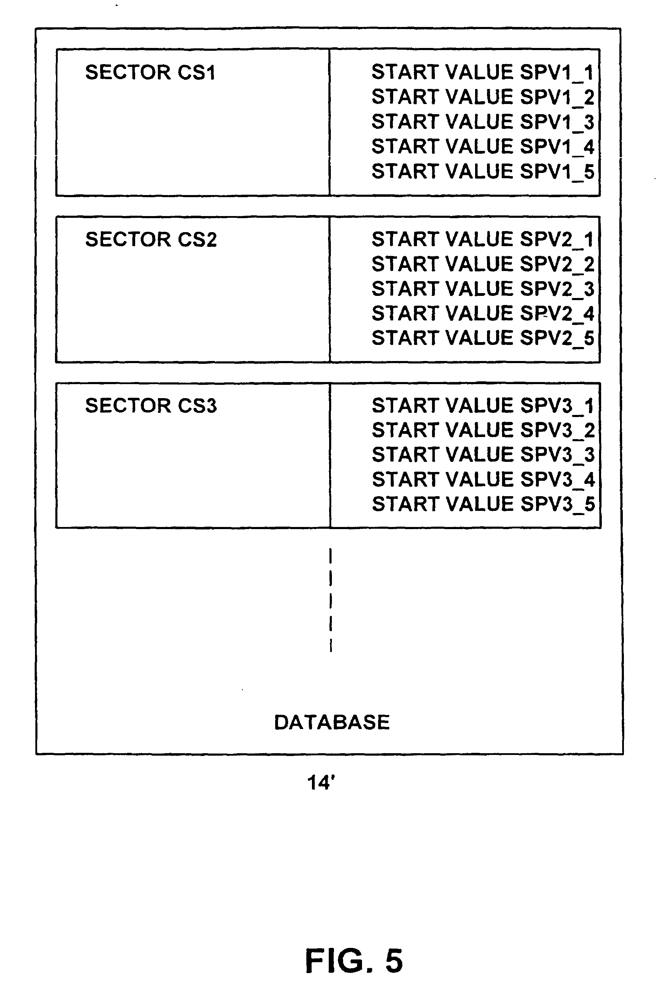

In detail, a predetermined number of past propagation values can be stored and be used in order to create a start value by calculating the average value thereof. For carrying out this measure, the database 14 has to be modified such that for each sector a predetermined number (for example, 5) of propagation delay values are stored. Such a modified database 14' is shown in Fig. 5, wherein for each sector five start values are stored. For simplifying the illustration, only three sectors are shown. Updating of the database 14' has to be effected such that always the oldest propagation delay value is replaced by the new one. Thus, the updating means 17 has to be correspondingly modified.

According to this modification of the preferred embodiment, it can be avoided that sudden and short-time changes in the communication conditions lead to unrealistic start values.

According to the embodiments described above the method for synchronisation is performed in a base station BS. However, the BS is only an example for a network control device. For example, the method can also be performed in a corresponding base station controller BSC controlling a plurality of BS's or in a mobile services switching center MSC controlling a plurality of BSC's. Such an arrangement is useful in case an existing network should be provided with the method according to the invention. Thus, if the method is carried out in only a few central network control devices, it is not necessary to update each base station. Hence, costs for updating a radio network can be reduced.

The above description and accompanying drawings only illustrate the present invention by way of example. Thus, the embodiments of the invention may vary within the scope of the attached claims. Furthermore, it is possible to combine the above-described embodiments (i.e., the preferred embodiment and the modification thereof).

## Claims

1. A method for performing synchronisation of a mobile network device (**2**) to a network control device (**1**) of a present radio network region (**CST**), comprising the steps of
detecting (**S1**) a source radio network region (**CS1 to CS8**) from which a handover of said mobile network device (2) to said present radio network region (**CST**) has been performed,
determining (**S2, S3**) a start propagation delay value (**SPV1 to SPV8**; **SPV1_1** to **SPV1_5**) based on said detected source radio network region (**CS1 to CS8**) of said mobile station (**2**), and
searching (**S4**) an actual propagation delay value by using a search strategy based on said determined start propagation delay value (**SPV1 to SPV8**; **SPV1_1 to SPV1_5**).

2. The method according to claim 1, wherein for a plurality of adjacent sectors (**CS1 to CS8**) start propagation delay values (**SPV1 to SPV8**; **SPV1_1 to SPV1_5**) are stored in a database (**14**; **14'**).

3. The method according to claim 2, further comprising the step of
updating (**S6**) said database (**14**; **14**') with said searched actual propagation delay value after performing said search step.

4. The method according to claim 3, wherein for each adjacent sector (**CS1 to CS8**) one start propagation value (**SPV1 to SPV8**) is stored.

5. The method according to claim 3, wherein for each adjacent sector (**CS1 to CS8**) a plurality of start propagation values (**SPV1_1 to SPV1_5**) are used and the average and distribution of said plurality of start propagation values (**SPV1_1 to SPV1_5**) are used as the basis for said search strategy.

6. The method according to claim 5, wherein also the distribution said plurality of start propagation values (**SPV1_1 to SPV1_5**) are used as the basis for said search strategy.

7. The method according to claim 1, wherein said search strategy is expanding window.

8. The method according to claim 1, wherein said search strategy is z-search.

9. A network control device of a present radio network region (**CST**), comprising
a detecting means (**11**) for detecting a source radio network region (**CS1 - CS8**) from which a handover of a mobile network device (**2**) to the present radio network region (**CST**) has been performed,
a determining means (**12, 14**) for determining a start propagation delay value (**SPV1 to SPV8**; **SPV1_1 to SPV1_5**) based on said detected source radio network region (**CS1 to CS8**) of said mobile station (**2**), and
a search means (**13**) for searching an actual propagation delay value by using a search strategy based on the determined start propagation delay value (**SPV1 to SPV8; SPV1_1 to SPV1_5**).

10. The device according to claim 9, further comprising
a database (**14**; **14'**) in which for a plurality of adjacent sectors (**CS1 to CS8**) start propagation delay values (**SPV1 to SPV8**; **SPV1_1 to SPV1_5**) are stored, wherein said determining means (**12**) accesses said database (**14**).

11. The device according to claim 10, further comprising
an updating means (**17**) for updating said database with the current propagation delay value detected by said search means (**13**).

12. The device according to claim 11, wherein for each adjacent sector (**CS1 to CS8**) one start propagation value (**SPV1 to SPV8**) is stored in said database (**14**).

13. The device according to claim 11, wherein for each adjacent sector (**CS1 to CS8**) a plurality of start propagation values (**SPV1_1 to SPV1_5**) are stored in said database (**14'**) and said updating means (**17**) is adapted to use the average of said plurality of start propagation values (**SPV1**_**1** to **SPV1_5**) are used as the basis for said search strategy.

14. The device according to claim 5, wherein also the distribution said plurality of start propagation values (**SPV1_1 to SPV1_5**) are used as the basis for said search strategy.

15. The device according to claim 1, wherein said search strategy is expanding window.

16. The device according to claim 1, wherein said search strategy is z-search.

## Patentansprüche

1. Verfahren zur Durchführung einer Synchronisation einer mobilen Netzeinrichtung (2) mit einer Netzsteuerungseinrichtung (1) eines aktuellen Funknetzbereichs (CST), mit den Schritten
Erfassen (S1) eines Quellen-Funknetzbereichs (CS1 bis CS8), aus dem ein Handover der mobilen Netzeinrichtung (2) in das aktuelle Netzgebiet durchgeführt wurde,
Bestimmen (S2, S3) eines Anfangsausbreitungsverzögerungswertes (SPV1 bis SPV8; SPV_1 bis SPV_5) beruhend auf dem erfassten Quellen-Funknetzgebiet (CS1 bis CS8) der Mobilstation (2), und
Suchen (S4) eines tatsächlichen Ausbreitungsverzögerungswertes unter Verwendung einer Suchstrategie beruhend auf dem bestimmten Anfangsausbreitungsverzögerungswert (SPV1 bis SPV8; SPV_1 bis SPV_5).

2. Verfahren gemäß Patentanspruch 1, wobei Anfangsausbreitungsverzögerungswerte (SPV1 bis SPV8; SPV_1 bis SPV_5) für eine Vielzahl angrenzender Sektoren (CS1 bis CS8) in einer Datenbank (14; 14') gespeichert werden.

3. Verfahren gemäß Patentanspruch 2, ferner mit dem Schritt
Aktualisieren (S6) der Datenbank (14; 14') mit dem gefundenen tatsächlichen Ausbreitungsverzögerungswert nach der Durchführung des Suchschritts.

4. Verfahren gemäß Patentanspruch 3, wobei für jeden angrenzenden Sektor(CS1 bis CS8) ein Anfangsausbreitungswert (SPV1 bis SPV8) gespeichert wird.

5. Verfahren gemäß Patenanspruch 3, wobei für jeden angrenzenden Sektor(CS1 bis CS8) eine Vielzahl von Anfangsausbreitungswerten (SPV_1 bis SPV_5) verwendet wird und der Durchschnitt und die Verteilung der Vielzahl der Anfangsausbreitungswerte (SPV_1 bis SPV_5) als Grundlage für die Suchstrategie verwendet werden.

6. Verfahren gemäß Patentanspruch 5, wobei auch die Verteilung der Vielzahl der Anfangsausbreitungswerte (SPV_1 bis SPV_5) als Grundlage für die Suchstrategie verwendet wird.

7. Verfahren gemäß Patentanspruch 1, wobei die Suchstrategie ein Erweiterungsfenster ist.

8. Verfahren gemäß Patentanspruch 1, wobei die Suchstrategie eine z-Suche ist.

9. Netzsteuerungseinrichtung eines aktuellen Funknetzgebiets (CST), mit
einer Erfassungseinrichtung (11) zum Erfassen eines Quellen-Funknetzbereichs (CS1 - CS8), aus dem ein Handover einer mobilen Netzeinrichtung (2) in das aktuelle Funknetzgebiet durchgeführt wurde,
einer Bestimmungseinrichtung (12, 14) zum Bestimmen eines Anfangsausbreitungsverzögerungswertes (SPV1 bis SPV8; SPV_1 bis SPV_5) beruhend auf dem erfassten Quellen-Funknetzgebiet (CS1 bis CS8) der Mobilstation (2), und
einer Sucheinrichtung (13) zum Suchen eines tatsächlichen Ausbreitungsverzögerungswertes unter Verwendung einer Suchstrategie beruhend auf dem bestimmten Anfangsausbreitungsverzögerungswert (SPV1 bis SPV8; SPV_1 bis SPV_5).

10. Einrichtung gemäß Patentanspruch 9, ferner mit einer Datenbank (14; 14'), in der Anfangsausbreitungsverzögerungswerte (SPV1 Bis SPV8; SPV_1 bis SPV_5) für eine Vielzahl von angrenzenden Sektoren (CS1 bis CS8) gespeichert sind, wobei die Bestimmungseinrichtung (12) auf die Datenbank (14) zugreift.

11. Einrichtung gemäß Patentanspruch 10, ferner mit
einer Aktualisierungseinrichtung (17) zum Aktualisieren der Datenbank mit dem aktuellen durch die Sucheinrichtung erfassten Ausbreitungsverzögerungswert.

12. Einrichtung gemäß Patentanspruch 11, wobei für jeden angrenzenden Sektor(CS1 bis CS8) ein Anfangsausbreitungswert (SPV1 bis SPV8) in der Datenbank (14) gespeichert ist.

13. Einrichtung gemäß Patentanspruch 11, wobei für jeden angrenzenden Sektor(CS1 bis CS8) eine Vielzahl von Anfangsausbreitungswerten (SPV_1 bis SPV_5) in der Datenbank (14') gespeichert ist und die Aktualisierungseinrichtung (17) zur Verwendung des Mittelwerts der Vielzahl der Anfangsausbreitungswerte (SPV_1 bis SPV_5) als Grundlage für die Suchstrategie eingerichtet ist.

14. Einrichtung gemäß Patentanspruch 13, wobei auch die Verteilung der Vielzahl der Anfangsausbreitungswerte (SPV_1 bis SPV_5) als Grundlage für die Suchstrategie verwendet wird.

15. Einrichtung gemäß Patentanspruch 9, wobei die Suchstrategie ein Erweiterungsfenster ist.

16. Einrichtung gemäß Patentanspruch 9, wobei die Suchstrategie eine z-Suche ist.

## Revendications

1. Procédé permettant d'effectuer une synchronisation d'un dispositif de réseau mobile (2) avec un dispositif de commande de réseau (1) d'une région de réseau de radiocommunication actuelle (CST), comprenant les étapes consistant à :
détecter (S1) une région de réseau de radiocommunication source (CS1 à CS8) à partir de laquelle un transfert dudit dispositif de réseau mobile (2) à la région de réseau de radiocommunication actuelle (CST) a été effectué,
déterminer (S2, S3) une valeur de retard de propagation de départ (SPV1 à SPV8 ; SPV1_1 à SPV1_5) sur la base de ladite région de réseau de radiocommunication source détectée (CS 1 à CS8) de ladite station mobile (2), et
rechercher (S4) une valeur de retard de propagation réelle à l'aide d'une stratégie de recherche basée sur ladite valeur de retard de propagation de départ déterminée (SPV1 à SPV8 ; SVP1_1 à SPV1_5).

2. Procédé selon la revendication 1, dans lequel pour une pluralité de secteurs adjacents (CS1 à CS8), des valeurs de retard de propagation de départ (SPV1 à SPV8 ; SPV1_1 à SPV1_5) sont stockées dans une base de données (14 ; 14').

3. Procédé selon la revendication 2, comprenant en outre l'étape consistant à :
mettre à jour (S6) ladite base de données (14 ; 14') avec ladite valeur de retard de propagation réelle recherchée après exécution de ladite étape de recherche.

4. Procédé selon la revendication 3, dans lequel pour chaque secteur adjacent (CS1 à CS8), une valeur de propagation de départ (SPV1 à SPV8) est stockée.

5. Procédé selon la revendication 3, dans lequel pour chaque secteur adjacent (CS1 à CS8), une pluralité de valeurs de propagation de départ (SPV1_1 à SPV1_5) est utilisée et la moyenne et la distribution de ladite pluralité de valeurs de propagation de départ (SPV1_1 à SPV1_5) est utilisée comme base pour ladite stratégie de recherche.

6. Procédé selon la revendication 5, dans lequel la distribution de ladite pluralité de valeurs de propagation de départ (SPV1_1 à SPV1_5) est également utilisée comme base pour ladite stratégie de recherche.

7. Procédé selon la revendication 1, dans lequel ladite stratégie de recherche est une fenêtre d'expansion.

8. Procédé selon la revendication 1, dans lequel ladite stratégie de recherche est une recherche z.

9. Dispositif de commande de réseau d'une région de réseau de radiocommunication actuelle (CST), comprenant
des moyens de détection (11) pour détecter une région de réseau de radiocommunication source (CS1 à CS8) à partir de laquelle un transfert d'un dispositif de réseau mobile (2) à la région de réseau de radiocommunication actuelle (CST) a été effectué,
des moyens de détermination (12, 14) pour déterminer une valeur de retard de propagation de départ (SPV1 à SPV8 ; SPV1_1 à SPV1_5) sur la base de ladite région de réseau de radiocommunication source détectée (CS1 à CS8) de ladite station mobile (2), et
des moyens de recherche (13) pour rechercher une valeur de retard de propagation réelle à l'aide d'une stratégie de recherche basée sur ladite valeur de retard de propagation de départ déterminée (SPV1 à SPV8 ; SVP1_1 à SPV1_5).

10. Dispositif selon la revendication 9, comprenant en outre
une base de données (14; 14') dans laquelle pour une pluralité de secteurs adjacents (CS1 à CS8), des valeurs de retard de propagation de départ (SPV1 à SPV8 ; SPV1_1 à SPV1_5) sont stockées, dans lequel lesdits moyens de détermination (12) accèdent à ladite base de données (14).

11. Dispositif selon la revendication 10, comprenant en outre
des moyens de mise à jour (17) pour mettre à jour ladite base de données avec la valeur de retard de propagation actuelle détectée par lesdits moyens de recherche (13).

12. Dispositif selon la revendication 11, dans lequel pour chaque secteur adjacent (CS1 à CS8), une valeur de propagation de départ (SPV1 à SPV8) est stockée dans ladite base de données (14).

13. Dispositif selon la revendication 11, dans lequel pour chaque secteur adjacent (CS1 à CS8), une pluralité de valeurs de propagation de départ (SPV1_1 à SPV1_5) est stockée dans ladite base de données (14') et lesdits moyens de mise à jour (17) sont adaptés pour utiliser la moyenne de ladite pluralité de valeurs de propagation de départ (SPV1_1 à SPV1_5) comme base pour ladite stratégie de recherche.

14. Dispositif selon la revendication 5, dans lequel on utilise également la distribution de ladite pluralité de valeurs de propagation de départ (SPV1_1 à SPV1_5) comme base pour ladite stratégie de recherche.

15. Dispositif selon la revendication 1, dans lequel ladite stratégie de recherche est une fenêtre d'expansion.

16. Dispositif selon la revendication 1, dans lequel ladite stratégie de recherche est une recherche z.
